# EUROPÄISCHE PATENTSCHRIFT

(11) **EP 1 409 407 B1**
(45) Veröffentlichungstag und Bekanntmachung des Hinweises auf die Patenterteilung: **04.01.2006**
(21) Anmeldenummer: 02737934.6
(22) Anmeldetag: 09.04.2002
(51) Int. Cl.: C01B 33/06, C04B 41/88

(54) **HERSTELLUNG VON MG2-SI UND TERNÄRER VERBINDUNGEN MG2 (SI,E); (E=GE, SN, PB SOWIE ÜBERGANGSMETALLE; KLEINER ALS 10 GEW.%) AUS MGH2 UND SILIZIUM SOWIE VON MAGNESIUMSILICIDFORMKÖRPERN MITTELS PULS-PLASMA-SYNTHESE**
PRODUCTION OF MG2 SI AND TERNARY COMPOUNDS MG2 (SI,E); (E=GE, SN, PB AND TRANSITION METALS; SMALLER THAN 10 WT.%) MADE OF MGH2 AND SILICON AND THE PRODUCTION OF MAGNESIUM SILICIDE MOULDED BODIES BY PULSE-PLASMA-SYNTHESIS
PRODUCTION DE COMPOSES MG2-SI ET TERNAIRES MG2 (SI, E ; E=GE, SN, PB ET METAUX DE TRANSITION PLUS PETIT DE 10 % EN POIDS) A PARTIR DE MGH2 ET DE SILICIUM, AINSI QUE PRODUCTION DE CORPS MOULES EN SILICIURE DE MAGNESIUM PAR SYNTHESE AU PLASMA PULSE

(30) Priorität: 10.04.2001 DE 10117924
(43) Veröffentlichungstag der Anmeldung: 21.04.2004
(73) Patentinhaber: Max-Planck-Gesellschaft zur Förderung der Wissenschaften e.V., 80539 München (DE); Fraunhofer-Gesellschaft zur Förderung der angewandten Forschung e.V., 80636 München (DE)
(72) Erfinder: SCHMIDT, Marcus, 13189 Berlin (DE); SCHMIDT, Jürgen, 01187 Dresden (DE); GRIN, Yuri, 01309 Dresden (DE); BÖHM, Alexander, 01728 Hänichen (DE); KIEBACK, Bernd, 01728 Possendorf (DE); SCHOLL, Roland, 79733 Görwihl (DE); SCHUBERT, Thomas, 01796 Pirna (DE); WEISSGÄRBER, Thomas, 01328 Dresden (DE); ZUMDICK, Markus, 01239 Dresden (DE)
(74) Vertreter: Dey, Michael
(86) Internationale Anmeldenummer: PCT/EP2002/003953
(87) Internationale Veröffentlichungsnummer: WO 2002/083561

(56) Entgegenhaltungen:
- DE-A- 3 702 721
- KAJIKAWA, TAKENOBU ET AL: "Thermoelectric properties of magnesium silicide processed by powdered elements plasma activated sintering method" PROCEEDINGS OF THE INTERNATIONAL CONFERENCE ON THERMOELECTRICS (1997), 16TH, 275-278 , XP010275113
- LI G H ET AL: "MAGNESIUM SILICIDE INTERMETALLIC ALLOYS" METALLURGICAL TRANSACTIONS A. PHYSICAL METALLURGY AND MATERIALS SCIENCE, METALLURGICAL SOCIETY OF AIME. NEW YORK, US, Bd. 24A, Nr. 11, 1. November 1993 (1993-11-01), Seiten 2383-2391, XP000420877
- "CHEMICAL ABSTRACTS + INDEXES, AMERICAN CHEMICAL SOCIETY. COLUMBUS, US" CHEMICAL ABSTRACTS + INDEXES, AMERICAN CHEMICAL SOCIETY. COLUMBUS, US, XP000401681 ISSN: 0009-2258

## Beschreibung

Die vorliegende Erfindung betrifft die Herstellung von Magnesiumsilicid (Mg₂Si) sowie von Verbindungen, die von Magnesiumsilicid durch Substitution eines Teils des Magnesiums oder/und des Siliciums durch andere Elemente, abgeleitet sind und die Herstellung von Formkörpern aus solchen Verbindungen.

Magnesiumsilicid ist mit einer Dichte von 1,99 g/cm³ im Vergleich zu anderen Metallen bzw. Intermetallischen-Phasen-Legierungen ein leichter Werkstoff, der eine relativ hohe Härte von 4500 MN/m² und einen kleinen thermischen Ausdehnungskoeffizienten von 7,5 x 10⁻⁶ K⁻¹ aufweist. Mg₂Si ist eine bei 1085 °C kongruent schmelzende Verbindung, die nahezu keinen Homogenitätsbereich aufweist und bis 700 °C thermisch stabil ist. Elastizitätsmodul und Druckfestigkeit weisen bei Raumtemperatur Werte von 55 M Pa m³/kg bzw. 1600 M Pa auf.

Die aufgeführten Kenndaten sowie die gute Heißgaskorrosionsbeständigkeit machen Magnesiumsilicid zu einem interessanten Konstruktionswerkstoff für Bauteile geringer Dichte, die einer mittleren thermischen bzw. mechanischen oder thermisch-mechanischen Belastung unterliegen.

Es ist bekannt, Mg₂Si aus den Elementen herzustellen. Dazu werden entweder Magnesium und Silicium gemeinsam an Luft bzw. in inerter Atmosphäre erschmolzen oder homogene Pulvergemenge unterhalb des Schmelzpunktes in inerter Atmosphäre thermisch behandelt (Z. Anorg. Allg.

Chem. 384 (1971), 231-234; Materials Science Forum, Vols. 308-311 (1999), 687-692; Metallurgical Transactions, Vol. 24A, Nov. (1993), 2383-2391).

Desweiteren wurde die Darstellung von Magnesiumsilicid aus Siliciumdioxid und Magnesium, aus Siliciumtetrahalogeniden (insbesondere SiCl₄) und Magnesium sowie aus Alkalisilicofluoriden, z.B. K₂SiF₆ und Magnesium beschrieben (Gmelins Handbuch der Anorganischen Chemie, 8. Auflage, System-Nr. 27, S. 389-391).

DE 3702721 A1 umfasst die Herstellung von Intermetallischen-Phasen-Legierungen auf der Basis von Mg₂Si mit 0,1 bis 10 Gew. % Ge, Sn, Pb oder ähnlichen Legierungselementen und die Herstellung von Formkörpern durch Gieß- und pulvermetallurgische Verfahren, wobei jedoch grundsätzlich von vorgebildetem Mg₂Si ausgegangen wird.

SU 1765226 A1 beschreibt ein Verfahren zur Herstellung von Magnesiumsilicid, bei dem ein Zusammenschmelzen von Silicium und Magnesium in einer Inertgasatmosphäre bei Temperaturen durchgeführt wird, die um 30 bis 50 °C höher als die Liquidustemperatur sind. Das Silicium/Magnesium-Verhältnis wird im Bereich 1:3 bis 1:6 eingestellt. Die Schmelze wird bis zu Temperaturen von 680 °C bis 900 °C abgekühlt und der Überschuss von Magensium im Vakuum von der Schmelze abgetrennt. Anschließend wird der Reaktor mit einem Inertgas gefüllt und bis zur Raumtemperatur abgekühlt. Ziel dieses Verfahrens ist die Erhöhung der Reaktivität von Magnesiumsilicid bei der Herstellung von Silanen durch Ausbildung einer schwammartigen Struktur.

Aufgrund der potentiellen Anwendbarkeit von Mg₂Si als Konstruktionswerkstoff besteht jedoch ein Bedarf, Mg₂Si in hochreiner Form herzustellen. Darüber hinaus ist Magnesiumsilicid für viele Anwendungen zu spröde, so dass eine Verbesserung der mechanischen Eigenschaften bei Beibehaltung der vorteilhaften thermischen Eigenschaften und geringen Dichte von Vorteil wäre.

Eine Aufgabe der vorliegenden Erfindung war es deshalb, ein Verfahren zur Herstellung von Magnesiumsilicid und daraus abgeleiteten Verbindungen herzustellen, mit welchem die Nachteile des Standes der Technik zumindest teilweise ausgeräumt werden können.

Diese Aufgabe wird erfindungsgemäß gelöst durch ein Verfahren zur Herstellung von Verbindungen der Formel (I) Mg_{2-y}Me_{z}Si₁₋ₓEₓ, worin
- Me =: ein oder mehrere Elemente ausgewählt aus den Alkalimetallen, Erdalkalimetallen und Seltenerdmetallen,
- E =: ein oder mehrere Elemente ausgewählt aus Ge, Sn und Pb und den Übergangsmetallen
- x =: 0 bis 0,1,
- y =: 0 bis 0,2 und
- z =: 0 bis 0,4,

welches dadurch gekennzeichnet ist, dass man MgH₂ und gegebenenfalls Me-Hydrid oder/und Me mit Si und gegebenenfalls mit E umsetzt.

Bevorzugt wird eine Verbindung der Formel (I) Mg_{2-y}Me_{y}Si₁₋ₓEₓ hergestellt, in der Me, E, x und y die oben angegebenen Bedeutungen haben.

Überraschenderweise wurde festgestellt, dass das bekannte Verfahren zur Herstellung von Mg₂Si aus den Elementen erheblich verbessert werden kann, wenn anstelle von elementarem Mg Magnesiumhydrid (MgH₂) als Ausgangsmaterial eingesetzt wird. Insbesondere kann mit dem erfindungsgemäßen Verfahren die gewünschten Verbindungen der Formel (I) auf einfache Weise und in hoher Reinheit erhalten werden. Der Nachteil der Verwendung von metallischem Magnesium, beispielsweise Magnesiumpulver, wie sie im Stand der Technik zur Herstellung von Mg₂Si beschrieben wird, besteht insbesondere darin, dass sich an der Oberfläche von metallischem Mangnesium oft MgO befindet. Der in der Oxidhaut enthaltene Sauerstoff führt jedoch zur Verunreinigung des aus elementarem Mg gebildeten Mg₂Si. Im Gegensatz dazu kann Magnesiumhydrid als deutlich reinerer Ausgangsstoff eingesetzt werden.

Die Umsetzung des Magnesiumhydrids mit Silicium findet bevorzugt bei erhöhten Temperaturen, insbesondere bei Temperaturen ≥50 °C, mehr bevorzugt ≥280 °C und am meisten bevorzugt ≥500 ° C statt. Besonders bevorzugt wird das erfindungsgemäße Verfahren bei einer Temperatur <650 °C, insbesondere <600 °C durchgeführt.

Um eine Verunreinigung der gewünschten Verbindung der Formel (I) während der Umsetzung zu vermeiden, wird das erfindunsgemäße Verfahren bevorzugt unter einer Inertgasatmosphäre, beispielsweise in einer Edelgasatmosphäre, wie etwa einer Helium-, Neon- oder Argonatmosphäre durchgeführt.

Es wurde nun festgestellt, dass ein Teil des Magnesiums oder/und ein Teil des Silicium der Verbindung der Formel (I) bei dem erfindungsgemäßen Herstellungsverfahren durch ein oder mehrere andere Elemente ersetzt werden kann. Hierzu werden als Elemente, welche einen Teil des Magnesiums ersetzen sollen, insbesondere Alkalimetalle, wie etwa Li, Na, K, Rb oder Cs, Erdalkalimetalle, wie etwa Be, Ca, Sr oder Ba, oder/und Seltenerdmetalle entweder ebenfalls als Metallhydrid oder/und als elementares Metall, dem Reaktionsgemisch zugesetzt.

Elemente, welche einen Teil des Siliciums ersetzen sollen, insbesondere Ge, Sn oder/und Pb sowie Übergangsmetalle, insbesondere Übergangsmetalle der Gruppen 3 bis 12 (nach neuer IUPAC-Nomenklatur) des Periodensystems der Elemente, können, ebenso wie das Silicium, in elementarer Form dem Reaktionsgemisch zugegeben werden. Mit dem erfindungsgemäßen Verfahren ist es somit auf einfache Weise möglich, Intermetallische-Phasen auf Basis von Mg₂Si herzustellen, in denen ein Teil des Mg oder/und ein Teil des Si durch andere Elemente ersetzt ist. Durch die gezielte Einlagerung von weiteren Elementen in das Mg₂Si-Grundgerüst können die mechanischen Eigenschaften von Mg₂Si und insbesondere die mechanischen Eigenschaften im Hinblick auf Sprödigkeit, verbessert werden.

In einer bevorzugten Ausführungsform des erfindungsgemäßen Verfahrens stellt man hochreines Mg₂Si durch Umsetzung von MgH₂ und Si her. Weiterhin ist es bevorzugt, ternäre Verbindungen herzustellen mit der Formel (II) Mg₂Si₁₋ₓEₓ, worin E = Ge, Sn, Pb oder ein Übergangsmetall und x = 0 bis 0,1 ist.

In einer besonders vorteilhaften Ausführungsform betrifft die Erfindung ein Verfahren zur Herstellung von Verbindungen der Formel (I), Mg_{2-y}Me_{z}Si₁₋ₓEₓ, worin worin
- Me =: ein oder mehrere Elemente ausgewählt aus den Alkalimetallen, Erdalkalimetallen und Seltenerdmetallen,
- E =: ein oder mehrere Elemente ausgewählt aus Ge, Sn, Pb oder/und den Übergangsmetallen,
- x =: 0 bis 0,1,
- y =: 0 bis 0,2 und
- z =: 0 bis 0,4,

welches dadurch gekennzeichnet ist, dass man MgH₂, und gegebenenfalls eine Me-haltige Verbindung und mindestens eine Si-haltige Verbindung und gegebenenfalls eine E-haltige Verbindung mittels Puls-Plasma-Synthese umsetzt. Bevorzugt wird als Silicium-haltige Verbindung elementares Si eingesetzt. Besonders bevorzugt wird eine Verbindung der Formel (I) Mg_{2-y}Me_{y}Si₁₋ₓEₓ hergestellt.

Bei der Puls-Plasma-Synthese handelt es sich um ein neuartiges Verfahren zur Herstellung von Verbindungen aus Vorläufermaterialien, wobei während der Puls-Plasma-Synthese eine chemische Umsetzung der Vorläufermaterialien zu dem gewünschten Produkt erfolgt.

Zur Durchführung der Puls-Plasma-Synthese können Verfahrensbedingungen und Apparaturen herangezogen werden, wie sie für das Puls-Plasma-Verfahren eingesetzt werden. Das Puls-Plasma-Verfahren, welches auch Spark-Plasma-Prozess genannt wird, dient somit insbesondere zur Formgebung oder Sinterung von Pulvern sowie zur Herstellung von Functionally Graded Materials (FGM), beispielsweise von Verbundmateralien aus Metallpulvern und Isolatorenpulvern und wird selten für chemische Synthese eingesetzt.

Das Puls-Plasma-Verfahren bzw. der Spark-Plasma-Prozess und dafür geeignete Apparaturen und Verfahrensparameter sind z.B. beschrieben in US 3,241,956; US 3,250,982; WO 00/58235; EP 1043149; EP 1040886; JP 10251057; JP 10251070; JP 10194859; JP 5001304; JP 6287076 und JP 7216409.

Es wurde nun überraschenderweise festgestellt, dass unter Verwendung der Puls-Plasma-Technik auch eine kontrollierte Synthese durchgeführt werden kann, dass also Ausgangsmaterialien, die sich chemisch von dem gewünschten Endmaterial unterscheiden, in ein Endmaterial überführt werden können. Wesentlich bei der Puls-Plasma-Synthese ist somit, dass sich die Ausgangs- bzw. Vorläufermaterialien chemisch von dem Produkt unterscheiden.

Die Plasma-Puls-Synthese ist ein Verfahren, welches es erlaubt, ein Pulvergemenge, z.B. Magnesiumhydrid und Silicium, zu einem gewünschten Produkt, z.B. zu Magnesiumsilicid, umzusetzen und gleichtzeitig zu einem Formkörper zu sintern. Die Technik wird nachfolgend am Beispiel der Umsetzung von MgH₂ und Si beschrieben, wobei die Technik in gleicher Weise auch auf die anderen hierin angegebenen Ausgangsmaterialien angewendet werden kann. Bei der Puls-Plasma-Synthese wird ein Pulvergemenge, insbesondere ein stöchiometrisches, homogenes Pulvergemenge, bestehend aus Silicium und Magnesiumhydrid, in einer Inertgasatmosphäre, beispielsweise in einer Argonatmosphäre zur Reaktion gebracht. Dazu wird ein Pulvergemenge in eine Vertiefung einer Matritze, beispielsweise einer zylindrischen Graphit- oder Hartmetallpressmatritze, eingebracht und zwischen zwei Stempeln aus dem gleichen Material gepresst. Die das Presswerkzeug aufnehmende Synthesekammer erlaubt sowohl das Arbeiten unter Vakuum als auch in einer druckvariablen Inertgasatmosphäre. Zwischen den beiden Stempeln wird dann ein gepulster Strom von bis zu 2000 A angelegt, um Funken innerhalb des Pulvers und insbesondere zwischen den Partikeloberflächen zu erzeugen. Funkenbildung erfolgt in der Nähe von Oberflächenkontaktpunkten der einzelnen Pulverpartikel und an Korngrenzen innerhalb der Partikel. Diese Funken und die durch den Stromfluss entstehende Joule'sche Wärme erhitzen den Pulverpressling und die Matritze. An das Material wird bevorzugt ein Druck von 0,1 bis 10 bar, insbesondere 1 bis 5 bar angelegt.

Durch das lokale Auftreten von hohen Temperaturen werden adsorbierte Gase entfernt, passivierende Öberflächenschichten (z.B. Oxide) zerstört, die zum Einsetzen der chemischen Bildungsreaktion notwendige Aktivierungsenergie zugeführt und begünstigt durch den Druck auf das Presswerkzeug die Partikel an den Oberflächenkontaktpunkten verschweißt.

Oberhalb der Reaktionstemperatur erfolgt die Umsetzung von Magnesiumhydrid und Silicium zu Magnesiumsilicid entsprechend der Bruttogleichung

2 MgH₂, f + Si, f → Mg₂Si, f + 2 H₂, g.

Bei der Reaktion entstehender Wasserstoff entweicht kontinuierlich und kontrolliert aus dem Presswerkzeug.

Die Ausbildung der Gefügeeigenschaften wird durch die Teilchengröße der eingesetzten Pulver sowie durch die Syntheseparameter Temperatur-Zeit-Profil und Druck-Zeit-Profil erreicht.

Das erfindungsgemäße Verfahren unter Verwendung von MgH₂ und der Puls-Plasma-Synthese bietet zahlreiche Vorteile gegenüber den bekannten Verfahren, wie z.B. Gießverfahren oder heißisostatischem Pressen. Durch Anlegen von Strompulsen kann die gesamte Arbeitstemperatur im Vergleich zu herkömmlichen Verfahren abgesenkt werden, bei der Herstellung von Magnesiumsilicid aus Magnesiumhydrid und Silicium beispielsweise auf maximal 800°C. Gleichzeitig treten durch die gepulste Betriebsweise lokal sehr hohe Temperaturen auf, wodurch an den Edukten adsorbierte Gase, welche zu einer Verunreinigung des Endproduktes führen könnten, entfernt werden. Weiterhin führt das lokale Auftreten von hohen Temperaturen dazu, dass passivierende Oberflächen-Schichten, z.B. Oxide, zerstört werden. Auf diese Weise ist es möglich, in der Puls-Plasma-Synthese auch Ausgangsmaterialien einzusetzen, welche Oberflächenschicht oder andere Verunreinigungen aufweisen, da diese Verunreinigungen während des Synthesevorgangs zumindest teilweise entfernt werden. Während, wie oben angegeben, die mittlere Arbeitstemperatur abgesenkt werden kann, wird gleichwohl durch das lokale Auftreten von hohen Temperaturen die zum Einsetzen einer chemischen Bildungsreaktion notwendige Aktivierungsenergie zugeführt. Es ist deshalb überraschenderweise möglich, mit dem Puls-Plasma-Verfahren nicht nur bereits vorgebildete chemische Verbindungen zu sintern, sondern eine echte Synthese, d.h. die Bildung von chemischen Verbindungen aus Ausgangsmaterialen, durchzuführen. Insbesondere bei Anlegen von Druck werden die gebildeten Substanzpartikel zudem an den Oberflächenkontaktpunkten verschweißt. Dadurch können zwei Stufen, nämlich Herstellen der gewünschten chemischen Substanz und Sintern der Substanz, in einem einzigen Schritt durchgeführt werden, was zu einer erheblichen Beschleunigung des Gesamtvorgangs führt. Zudem kann eine sehr hohe Dichte des Sinterkörpers, insbesondere eine Dichte > 95 % der Theorie, mehr bevorzugt > 98 % der Theorie und am meisten bevorzugt >99 % der Theorie erreicht werden. Es ist aber auch möglich, geringere Dichten einzustellen, beispielsweise indem bei geringeren Anpressdrücken gearbeitet wird. Auf jeden Fall kann ein Produkt erhalten werden, das ohne erkennbare Risse gesintert ist.

Durch das Zusammenfassen von Synthese und pulvermetallurgischer Herstellung von . Formkörpern mittels der Puls-Plasma-Synthese erfolgt sowohl eine zeit- als auch eine energieökonomische Reduzierung der Arbeitsschritte.

Die lokal hohen Temperaturen an den Oberflächenkontaktpunkten, welche eine Sinterung auch von sonst schwer sinterbaren Verbindungen erlauben, ermöglichen zudem den Ausschluss von organischen Bindemitteln als Verarbeitungshilfsmittel, wodurch ein von unerwünschten Verunreinigungen freies Syntheseprodukt erhalten werden kann.

Mit der erfindungsgemäß eingesetzten Puls-Plasma-Synthese können Verbindungen der Formel (I) dadurch hergestellt werden, dass die Ausgangsmaterialien in der Stöchiometrie des herzustellenden Produkts eingesetzt werden. Beispielsweise werden zur Herstellung von Mg₂Si MgH₂ (bezogen auf Mg) und Si bevorzugt in einem Molverhältnis von 2:0,9 bis 2:1,1, insbesondere von 2:1, eingesetzt. Aufgrund des geschlossenen Systems und der geringen Gesamtarbeitstemperaturen tritt ein Abdampfen oder ein Verlust von gewünschten Materialien praktisch nicht auf, so dass die Stöchiometrie des Produkts exakt und kontrolliert eingestellt werden kann.

Die Verfahrensbedingungen für die Puls-Plasma-Synthese können je nach Ausgangsmaterialien auf einfache Weise vom Fachmann bestimmt werden, wobei üblicherweise Pulse mit einer Stromstärke von mindestens 5 A, mehr bevorzugt mindestens 10 A und am meisten bevorzugt mindestens 100 A und bis zu 5000 A, mehr bevorzugt bis zu 2000 A angelegt werden. Die Spannung der Pulse beträgt typischerweise 0,5 bis 300 V, bevorzugt 1 bis 10 V. Die Pulse haben üblicherweise ein Länge von 0,1 bis 10 ms, insbesondere von 1 bis 5 ms. Die Gesamtaufheizung der Probe ist von der Frequenz der angelegten Pulse abhängig. Überlicherweise werden die Pulse in einem Frequenzbereich von 10 bis 1000 Hz, insbesondere von 50 bis 200 Hz, angelegt. Es ist aber auch möglich, eine höhere Frequenz zu wählen, falls die Temperatur für die Umsetzung nicht kritisch ist oder eine niedrigere Frequenz, falls eine vorgegebene Maximaltemperatur auf keinen Fall überschritten werden soll. Es ist möglich, die An- bzw. Auszeiten beim Pulsbetrieb unterschiedlich lang einzustellen, z.B. Anzeiten von 3 ms und Auszeiten von 6 ms. Üblicherweise wird die Reaktion so eingestellt, dass eine vorgegebene Reaktionstemperatur, beispielsweise die Verdampfungstemperatur einer der gewünschten Komponenten oder Produkts, nicht überschritten wird. Üblicherweise wird die Umsetzung bei Temperaturen ≤ 1000 °C, mehr bevorzugt ≤800 °C und am meisten bevorzugt ≤700 °C durchgeführt.

Die Puls-Plasma-Synthese wird bevorzugt in einer Atmosphäre durchgeführt, in der keine störenden Bestandteile in das gewünschte Produkt eingebracht werden, beispielsweise unter Vakuum oder in einer Schutzgasatmosphäre. Geeignete Schutzgase sind beispielsweise Stickstoff oder Edelgase, wie etwa Neon oder Argon. Das Schutzgas kann unter Druck gesetzt werden, um zusätzlich ein Abdampfen der gewünschten Edukte oder Produkte zu verhindern oder zu unterdrücken. Bevorzugt wird das Schutzgas unter einen Überdruck von 0,1-10 bar, mehr bevorzugt 0, 5-1 bar gesetzt.

Intermetallische Verbindungen entsprechend Formel (I) erhält man durch einfache Weise dadurch, dass ein Teil des Magnesiums in den Ausgangsstoffen durch ein anderes Metall ersetzt wird. In gleicher Weise kann das Silicium in dem gewünschten Produkt durch ein anderes Metall oder Nichtmetall teilweise ersetzt werden, insbesondere Ge,Sn oder Pb, indem entsprechende Ausgangsmaterialien eingesetzt werden.

Es ist erfindungsgemäß möglich, die Verbindung der Formel (I) als Pulver herzustellen. Bevorzugt wird jedoch ein Formkörper, insbesondere ein gesinterter Formkörper, bestehend aus einer Verbindung der Formel (I), gebildet. Aufgrund der vorteilhaften Eigenschaften des,erfindungsgemäßen Herstellungsverfahrens ist es möglich, die Verbindung sowohl in Pulverform als auch als Formkörper, mit einer hohen Reinheit und einer hohen Homogenität herzustellen. Insbesondere ist es möglich, die Verbindung mit einer Reinheit herzustellen, so dass der Anteil an unerwünschten Verunreinigungen ≤ 2 Gew. %, mehr bevorzugt ≤1 Gew. %, noch mehr bevorzugt ≤ 0,1 Gew. % und am meisten bevorzugt ≤0,01 Gew. % beträgt. Während es erfindungsgemäß möglich ist, einen verdichteten Formkörper in einem einzigen Schritt herzustellen, bei dem chemische Umsetzung und Verdichtung gleichzeitig stattfinden, ist es selbstverständlich auch möglich, diese beiden Schritte nacheinander durchzuführen, also erst ein Pulver einer Verbindung der Formel (I) herzustellen und dieses Pulver dann auf übliche Weise zu verdichten, beispielsweise durch Pulververdichtung, metallurgische Verfahren und insbesondere durch das Spark-Plasma-Verfahren. Der erfindungsgemäße Formkörper weist bevorzugt eine Größe von mindestens 0,1 mm, mehr bevorzugt mindestens 1 mm und am meisten bevorzugt mindestens 5 mm in mindestens einer, bevorzugt jeder Dimension auf. Es ist aber auch möglich, große Formkörper, beispielsweise große Platten oder Scheiben, herzustellen, die in mindestens einer Dimension 10 cm oder größer sind. Der erfindungsgemäße Formkörper weist insbesondere eine hohe Homogenität auf.

Während es möglich ist, erfindungsgemäß eine hochdichte Struktur, beispielsweise mit ≥ 95 % der theoretischen Dichte herzustellen, kann durch geeignete Wahl der Verfahrensparameter, insbesondere des bei der Puls-Plasma-Synthese angelegten Drucks sowie der Korngröße des Ausgangsmaterials, auch ein Formkörper mit poröser Struktur hergestellt werden. Eine solche poröse Struktur kann per se für viele Anwendungen vorteilhaft sein und direkt eingesetzt werden. Es ist aber auch möglich, diese poröse Struktur mit weiteren Materialien zu infiltrieren, beispielsweise mit Metallen oder/und Metalllegierungen.

Somit ist es möglich, das erfindungsgemäße Material (für den Fall das x oder/und y >0) noch zusätzlich mit weiteren Elementen zu dotieren, um die Materialeigenschaften weiter zu verbessern. Es ist aber auch möglich, ein Material durch Infiltrieren von porösem Mg₂Si mit einem oder mehreren anderen Elementen zu bilden.

Die Erfindung betrifft auch ein Material umfassend eine Verbindung der Formel (I) Mg_{2-y}Me_{z}Si₁₋ₓEₓ, worin
- Me =: ein oder mehrere Elemente ausgewählt aus den Alkalimetallen, Erdalkalimetallen und Seltenerdmetallen,
- E =: ein oder mehrere Elemente ausgewählt aus Ge, Sn oder/und Pb und den Übergangsmetallen,
- O <: x ≤0,1,
- O <: y ≤0,2 und
- O <: z ≤ 0,4.

Bevorzugt ist ein Material umfassend eine Verbindung der Formel (I) Mg_{2-y}Me_{y}Si₁₋ₓEₓ,

Dieses Material, in dem ein Teil des Magnesiums und ein Teil des Siliciums durch andere Elemente ersetzt ist, kann unmittelbar durch stöchiometrisches Zusammengeben und Umsetzen von Ausgangsmaterialien hergestellt werden, welche neben Mg und Si einen Anteil an Me- und E-haltigen Verbindungen umfassen. Daneben ist es möglich, zunächst Mg₂Si in poröser Form, wie oben beschrieben, herzustellen und dieses Material mit Me und Si in den gewünschten Proportionen zu infiltrieren.

Insbesondere bei der Herstellung mittels Puls-Plasma-Synthese werden Materialien mit hoher Homogenität und Gleichmäßigkeit erhalten. Aufgrund der bei der Puls-Plasma-Synthese vorherrschenden Bedingungen kommt es bei der Synthese zu einer hohen Diffusion, so dass ein Formkörper mit großer Homogenität erhalten wird.

Unter einer hohen Homogenität wie hierin verwendet wird verstanden, dass in einem Einheitskubus des Materials mit, einer Kantenlänge x alle darin enthaltenen Teilkuben mit einer Kantenlänge x eine stöchiomtrische Verteilung der in der Verbindung der Formel (I) enthaltenen Elemente zeigen, so dass eine Abweichung vom Mittelwert ≤ 10 %, mehr bevorzugt ≤2 % und am meisten bevorzugt ≤ 1 % für jedes der Elemente beträgt. Der Einheitskubus hat bevorzugt eine Länge von 1 mm, mehr bevorzugt von 5 mm und am meisten bevorzugt von 10 mm.

Die erfindungsgemäß herstellbare Verbindung der Formel (I) kann für zahlreiche Anwendungen eingesetzt werden. Zunächst ist es möglich, mit dem erfindungsgemäßen Verfahren Mg₂Si in hochreiner Form zu erhalten. Die erfindungsgemäß erhältlichen Formkörper oder/und Materialien sind aufgrund ihrer guten thermischen Eigenschaften und kleinen Dichte insbesondere als Werkstoff für Bauteile geringer Dichte, die einer mittleren thermischen bzw. mechanischen oder thermisch-mechanischen Belastung unterliegen einsetzbar. Durch den Austausch eines Anteils des Magnesiums und/oder des Siliciums durch andere Elemente, können insbesondere Materialien mit weiter verbesserten Eigenschaften erhalten werden, beispielsweise Materialien, die eine verringerte Sprödigkeit aufweisen.

Die Erfindung wird durch die nachfolgenden Beispiele weiter erläutert.

### Beispiele

### Beispiel 1: Synthese von Mg₂Si

Mg₂Si wurde gemäß der Reaktionsgleichung

2 MgH₂ + Si → Mg₂Si + H₂

hergestellt, wobei die Ausgangsmaterialien in stöchiometrischen Verhältnissen eingesetzt wurden. Die Synthese wurde als Puls-Plasma-Synthese durchgeführt, wobei die Ausgangsmaterialien als Pulver vermischt in die Vertiefung einer zylindrischen Graphitmatritze eingebracht und zwischen zwei Stempeln aus Graphit gepresst wurden. Es wurde ein gepulster Strom angelegt, wobei die mittlere Reaktionstemperatur 650 °C nicht überstieg. Nach einer Behandlungszeit von 1 Stunde wurde ein Formkörper aus hochreinem Mg₂Si erhalten.

## Patentansprüche

1. Verfahren zur Herstellung von Verbindungen der Formel (I) Mg_{2-y}Me_{z}Si₁₋ₓEₓ, worin
Me = ein oder mehrere Elemente ausgewählt aus den Alkalimetallen, Erdalkalimetallen und Seltenerdmetallen,
E = ein oder mehrere Elemente ausgewählt aus Ge, Sn, Pb oder/und den Übergangsmetallen,
x = 0 bis 0,1,
y = 0 bis 0,2 und
z = 0 bis 0,4,
**dadurch gekennzeichnet,**
**dass** man MgH₂ und gegebenenfalls Me-Hydrid oder/und Me mit Si und gegebenenfalls mit E umsetzt.

2. Verfahren nach Anspruch 1,
**dadurch gekennzeichnet,**
**dass** man Mg₂Si durch Umsetzung von MgH₂ und Si herstellt.

3. Verfahren zur Herstellung von Verbindungen der Formel (1) Mg_{2-y}Me_{z}Si₁₋ₓEₓ, worin
Me = ein oder mehrere Elemente ausgewählt aus den Alkalimetallen, Erdalkalimetallen und Seltenerdmetallen,
E = ein oder mehrere Elemente ausgewählt aus Ge, Sn, Pb oder/und den Übergangsmetallen,
x = 0 bis 0,1,
y = 0 bis 0,2 und
z = 0 bis 0,4,
**dadurch gekennzeichnet,**
**dass** man MgH₂ und gegebenenfalls eine Me-haltige Verbindung mit einer Si-haltigen und gegebenenfalls einer E-haltigen Verbindung mittels Puls-Plasma-Synthese umsetzt.

4. Verfahren nach Anspruch 3,
**dadurch gekennzeichnet,**
**dass** man MgH₂ und gegebenenfalls Me-Hydrid oder/und Me mit Si und gegebenenfalls mit E umsetzt.

5. Verfahren nach einem der vorhergehenden Ansprüche,
**dadurch gekennzeichnet,**
**dass** die Ausgangsmaterialien in der Stöchiometrie des herzustellenden Produkts eingesetzt werden.

6. Verfahren nach einem der Ansprüche 3 bis 5,
**dadurch gekennzeichnet,**
**dass** die Ausgangsmaterialien mit Strompulsen behandelt werden, die eine Stärke bis zu 2000 A und eine Länge bis zu 40 ms aufweisen.

7. Verfahren nach einem der Ansprüche 3 bis 6,
**dadurch gekennzeichnet,**
**dass** die Umsetzung bei einer Reaktionstemperatur ≤800 °C durchgeführt wird.

8. Verfahren nach einem der vorhergehenden Ansprüche,
**dadurch gekennzeichnet,**
**dass** die Verbindung der Formel (I) als Pulver hergestellt wird.

9. Verfahren der Ansprüche 1 bis 7,
**dadurch gekennzeichnet,**
**dass** ein Formkörper bestehend aus einer Verbindung der Formel (1) hergestellt wird.

10. Verfahren nach Anspruch 8,
weiterhin umfassend einen Schritt des Verdichtens des Pulvers.

11. Verfahren nach einem der Ansprüche 1 bis 7 oder 9 bis 10,
**dadurch gekennzeichnet,**
**dass** ein Material mit ≥90 % der theoretischen Dichte hergestellt wird.

12. Verfahren nach einem der Ansprüche 1 bis 10,
**dadurch gekennzeichnet,**
**dass** eine poröse Struktur hergestellt wird.

13. Verfahren nach Anspruch 12,
**dadurch gekennzeichnet,**
**dass** die poröse Struktur durch Sintern eines Pulvers einer Verbindung der Formel (1) erhalten wird.

14. Verfahren nach Anspruch 12,
**dadurch gekennzeichnet,**
**dass** die poröse Struktur durch Anlegen eines Drucks von ≤ 5 bar bei der Puls-Plasma-Synthese erhalten wird.

15. Verfahren nach einem der Ansprüche 12 bis 14,
weiterhin umfassend den Schritt:
Infiltrieren des aus einer Verbindung der Formel (I) gebildeten porösen Materials mit mindestens einem Metall oder/und einer Metalllegierung.

16. Hybridmaterial erhältlich durch ein Verfahren nach einem der vorhergehenden Ansprüche,
welches aus einer Verbindung der Formel (I) Mg_{2-y}Me_{z}Si₁₋ₓEₓ gebildet ist, worin
Me = ein oder mehrere Elemente ausgewählt aus den Alkalimetallen, Erdalkalimetallen oder/und Seltenerdmetallen,
E = ein oder mehrere Elemente ausgewählt aus Ge, Sn, Pb oder/und den Übergangsmetallen,
O < x ≤ 0,1,
O < y ≤ 0,2 und
O < z ≤ 0,4.

17. Formkörper erhältlich durch ein Verfahren nach einem der Ansprüche 1 bis 7 oder 9 bis 15, welcher aus einer Verbindung der Formel (I) Mg_{2-y}Me_{z}Si₁₋ₓEₓ gebildet ist, worin
Me = ein oder mehrere Elemente ausgewählt aus den Alkalimetallen, Erdalkalimetallen oder/und Seltenerdmetallen,
E = ein oder mehrere Elemente ausgewählt aus Ge, Sn, Pb oder/und den Übergangsmetallen,
O < x ≤ 0,1,
O < y ≤ 0,2 und
O < z ≤ 0,4.

18. Verwendung eines Formkörpers nach Anspruch 17 als Werkstoff für Bauteile geringer Dichte, die einer mittleren thermischen bzw. mechanischen oder thermisch-mechanischen Belastung ausgesetzt werden.

## Claims

1. A process for the production of compounds of the formula (I) Mg_{2-y}Me_{z}Si₁₋ₓEₓ, in which
Me = one or more elements selected from among alkali metals, alkaline earth metals and rare earth metals,
E = one or more elements selected from among Ge, Sn, Pb or/and transition metals,
x = 0 to 0.1,
y = 0 to 0.2 and
z = 0 to 0.4,
**characterised in that**
MgH₂ and optionally Me hydride or/and Me is/are reacted with Si and optionally with E.

2. A process according to claim 1,
**characterised in that**
Mg₂Si is produced by reacting MgH₂ and Si.

3. A process for the production of compounds of the formula (I) Mg_{2-y}Me_{z}Si₁₋ₓEₓ, in which
Me = one or more elements selected from among alkali metals, alkaline earth metals and rare earth metals,
E = one or more elements selected from among Ge, Sn, Pb or/and transition metals,
x = 0 to 0.1,
y = 0 to 0.2 and
z = 0 to 0.4,
**characterised in that**
MgH₂ and optionally an Me-containing compound is/are reacted with an Si-containing and optionally an E-containing compound by means of pulse-plasma synthesis.

4. A process according to claim 3,
**characterised in that**
MgH₂ and optionally Me hydride or/and Me is/are reacted with Si and optionally with E.

5. A process according to any one of the preceding claims,
**characterised in that**
the starting materials are introduced in the stoichiometry of the product to be produced.

6. A process according to any one of claims 3 to 5,
**characterised in that**
the starting materials are treated with current pulses which exhibit a strength of up to 2000 A and a length of up to 40 ms.

7. A process according to any one of claims 3 to 6,
**characterised in that**
the reaction is performed at a reaction temperature of ≤800°C.

8. A process according to any one of the preceding
claims,
**characterised in that**
the compound of the formula (I) is produced as a powder.

9. A process of claims 1 to 7,
**characterised in that**
a moulding consisting of a compound of the formula (I) is produced.

10. A process according to claim 8,
furthermore comprising a step of compacting the powder.

11. A process according to any one of claims 1 to 7 or 9 to 10,
**characterised in that**
a material with ≥90% of theoretical density is produced.

12. A process according to any one of claims 1 to 10,
**characterised in that**
a porous structure is produced.

13. A process according to claim 12,
**characterised in that**
the porous structure is obtained by sintering a powder of a compound of the formula (I).

14. A process according to claim 12,
**characterised in that**
the porous structure is obtained by applying a pressure of ≤5 bar during pulse-plasma synthesis.

15. A process according to any one of claims 12 to 14, furthermore comprising the step of:
infiltrating the porous material formed from a
compound of the formula (I) with at least one metal or/and a metal alloy.

16. A hybrid material obtainable by a process according to any one of the preceding claims,
which material is formed from a compound of the formula (I) Mg_{2-y}Me_{z}Si₁₋ₓEₓ, in which
Me = one or more elements selected from among alkali metals, alkaline earth metals or/and rare earth metals,
E = one or more elements selected from among Ge, Sn, Pb or/and transition metals,
0 < x ≤ 0.1,
0 < y ≤ 0.2 and
0 < z ≤ 0.4.

17. A moulding obtainable by a process according to any one of claims 1 to 7 or 9 to 15, which is formed from a compound of the formula (I) Mg_{2-y}Me_{z}Si₁₋ₓEₓ, in which
Me = one or more elements selected from among alkali metals, alkaline earth metals or/and rare earth metals,
E = one or more elements selected from among Ge, Sn, Pb or/and transition metals,
0 < x ≤ 0.1,
0 < y ≤ 0.2 and
0 < z ≤ 0.4.

18. Use of a moulding according to claim 17 as a material for low density components which are exposed to moderate thermal or mechanical or thermomechanical loads.

## Revendications

1. Procédé en vue de la fabrication de composés de la formule (1) Mg_{2-y}Me₂Si₁₋ₓEₓ, où
Me = un ou plusieurs éléments sélectionnés parmi les métaux alcalins, les métaux alcalino-terreux et les métaux de terres rares,
E = un ou plusieurs éléments sélectionnés parmi les métaux Ge, Sn, Pb et/ou les métaux de transition,
x = 0 à 0,1,
y = 0 à 0,2 et
z = 0 à 0,4,
**caractérisé en ce que** l'on fait réagir le MgH₂ et, le cas échéant, l'hydrure de Me et/ou le Me avec le Si et, le cas échéant, le E.

2. Procédé selon la revendication 1, **caractérisé**
**en ce que** l'on prépare le Mg₂Si par réaction du MgH₂ et du Si.

3. Procédé en vue de la fabrication de composés de la formule (1) Mg_{2-y}Me₂Si₁₋ₓEₓ, où
Me = un ou plusieurs éléments sélectionnés parmi les métaux alcalins, les métaux alcalino-terreux et les métaux de terres rares,
E = un ou plusieurs éléments sélectionnés parmi les métaux Ge, Sn, Pb et/ou les métaux de transition,
x = 0 à 0,1
y = 0 à 0,2 et
z = 0 à 0,4,
**caractérisé en ce que** l'on fait réagir le MgH₂ et, le cas échéant, un composé contenant du Me avec un composé contenant du Si et, le cas échéant, avec un composant contenant du E, à l'aide de la synthèse à plasma à pulsation.

4. Procédé selon la revendication 3, **caractérisé en ce que** l'on fait réagir le MgH₂ et, le cas échéant, l'hydrure de Me et/ou le Me avec le Si et, le cas échéant, avec le E.

5. Procédé selon l'une quelconque des revendications précédentes, **caractérisé en ce que** les matériaux de départ sont utilisés dans la stoechiométrie du produit à fabriquer.

6. Procédé selon l'une quelconque des revendications 3 à 5, **caractérisé en ce que** les matériaux de départ sont traités à l'aide de pulsations de courant, qui présentent une intensité allant jusqu'à 2000 A et une longueur/une durée allant jusqu'à 40 ms.

7. Procédé selon l'une quelconque des revendications 3 à 6, **caractérisé en ce que** la réaction est effectuée à une température de réaction supérieure ou égale 800°C.

8. Procédé selon l'une quelconque des revendications précédentes, **caractérisé en ce que** le composé de la formule (I) est fabriqué en tant que poudre.

9. Procédé selon les revendications 1 à 7, **caractérisé en ce que** l'on fabrique un corps de forme se composant d'un composé de la formule (I).

10. Procédé selon la revendication 8, comprenant en outre une étape de densification de la poudre.

11. Procédé selon l'une quelconque des revendications 1 à 7 ou 9 à 10, **caractérisé en ce que** l'on fabrique un matériau ayant une densité égale ou supérieure à 90% de la densité théorique.

12. Procédé selon l'une quelconque des revendications 1 à 10, **caractérisé en ce que** l'on fabrique une structure poreuse.

13. Procédé selon la revendication 12, **caractérisé en ce que** l'on obtient la structure poreuse par frittage d'une poudre d'un composé de la formule (I).

14. Procédé selon la revendication 12, **caractérisé en ce que** l'on obtient la structure poreuse par application d'une pression égale ou supérieure à 5 bars lors de la synthèse au plasma à pulsations.

15. Procédé selon l'une quelconque des revendications 12 à 14, comprenant en outre l'étape:
d'infiltration du matériau poreux formé à partir d'un composé de la
formule (I) à l'aide d'au moins un métal et/ou d'un alliage métallique.

16. Matériau hybride que l'on peut obtenir grâce à un procédé selon l'une quelconque des revendications précédentes qui est formé à partir d'un composé de la formule (I) Mg_{2-y}Me₂Si₁₋ₓEₓ, où
Me = un ou plusieurs éléments sélectionnés parmi les métaux alcalins, les métaux alcalino-terreux et les métaux de terres rares,
E = un ou plusieurs éléments sélectionnés parmi les métaux Ge, Sn, Pb et/ou les métaux de transition,
0 < x ≤ 0,1,
0 < y ≤ 0,2 et
0 < z ≤ 0,4.

17. Corps de forme, que l'on peut obtenir grâce à un procédé selon l'une quelconque des revendications 1 à 7 ou 9 à 15, qui est formé à partir d'un composé de la formule (I) Mg_{2-y}Me₂Si₁₋ₓEₓ, où
Me = un ou plusieurs éléments sélectionnés parmi les métaux alcalins, les métaux alcalino-terreux et les métaux de terres rares,
E = un ou plusieurs éléments sélectionnés parmi les métaux Ge, Sn, Pb et/ou les métaux de transition,
O < x ≤ 0,1,
0 < y ≤ 0,2 et
0 < z ≤ 0,4.

18. Utilisation d'un corps de forme selon la revendication 17 en tant que substance pour pièces à densité faible, qui sont exposées à une sollicitation moyenne thermique ou mécanique ou thermo-mécanique.
